Europäisches Patentamt

European Patent Office

Office européen des brevets

(11) Numéro de publication: **0 185 124**
**A1**

## (12) DEMANDE DE BREVET EUROPEEN

(21) Numéro de dépôt: **84402590.8**

(22) Date de dépôt: **14.12.84**

(51) Int. Cl.⁴: **C 08 G 18/50**
**C 08 G 18/12, C 08 G 18/40**
**C 08 G 18/48, C 08 G 18/14**

(43) Date de publication de la demande:
**25.06.86 Bulletin 86/26**

(84) Etats contractants désignés:
**AT BE CH DE FR GB IT LI LU NL SE**

(71) Demandeur: **Société Chimique des Charbonnages S.A.**
**Tour Aurore Place des Reflets**
**F-92080 Paris La Défense Cédex 5(FR)**

(72) Inventeur: **Laumain, François-Bernard**
**123 rue Anatole France**
**F-92300 Levallois-Perret(FR)**

(74) Mandataire: **Dubost, Thierry**
**SOCIETE CHIMIQUE DES CHARBONNAGES Service**
**Propriété Industrielle B.P. 57**
**F-62670 Mazingarbe(FR)**

(54) Prépolymères stables de polyisocyanates à fonctions hydroxyles, leur procédé de fabrication et leur application à la fabrication de polyuréthannes.

(57) Prépolymères stables de polyisocyanates à fonctions hydroxyles, constitués de produits de polyaddition d'au moins un polyisocyanate organique avec au moins un produit de condensation (A) d'oxyde d'alkylène sur une amine, en présence d'au moins un polyol (B) contenant des fonctions hydroxyles libres, caractérisés en ce que ledit polyol (B) contient des fonctions hydroxyles primaires et a un poids moléculaire supérieur ou égal à 3000.

Leur procédé de fabrication consiste à faire réagir à une température comprise entre 10° et 150°C, et plus habituellement entre 20° et 80°C, le mélange d'au moins un polyisocyanate organique, d'au moins un produit de condensation (A) et d'au moins un polyol (B).

EP 0 185 124 A1

Croydon Printing Company Ltd

La présente invention concerne des prépolymères stables de polyisocyanates à fonctions hydroxyles, leur procédé de fabrication et leur application à la fabrication de polyuréthannes, en particulier de mousses de haute résilience et de dureté élevée.

On connait déjà par le brevet américain n° 3 468 819 la réaction d'un polyisocyanate organique avec un mélange de polyols comprenant un polyol dépourvu d'azote tertiaire et de 5 à 40 % en poids d'un polyol contenant un azote tertiaire, ayant de 2 à 8 groupes hydroxyles et ayant un poids moléculaire de 175 à 1000. L'homme de métier a cependant observé que les produits ainsi définis présentent d'une part une stabilité très insuffisante et d'autre part des viscosités très élevées qui en compliquent l'emploi dans la fabrication de polyuréthannes.

C'est pourquoi un objet de la présente invention réside dans la mise au point de prépolymères de polyisocyanates à fonctions hydroxyles, obtenus selon une technique simple, qui ne décantent pas, qui sont stables en présence d'eau et possèdent des viscosités acceptables pouvant encore être abaissées, du fait de la stabilité du produit, par dilution dans un tiers polyol.

Les prépolymères selon l'invention sont constitués de produits de polyaddition d'au moins un polyisocyanate organique avec au moins un produit de condensation (A) d'oxyde d'alkylène sur une amine, en présence d'au moins un polyol (B) contenant des fonctions hydroxyles libres, caractérisés en ce que ledit polyol (B) contient des fonctions hydroxyles primaires et a un poids moléculaire supérieur ou égal à 3000. En outre l'objet de la présente invention sera d'autant mieux atteint que ces prépolymères possèderont au moins l'une des caractéristiques suivantes :

1) le polyol (B) contenant des fonctions hydroxyles primaires est un polyéther ou polythioéther ayant un poids moléculaire compris entre 3000 et 10 000 obtenu par réaction d'un oxyde d'alkylène avec un alcool polyfonctionnel ou un thiodiglycol. Un tel polyéther ou polythioéther possède des fonctions hydroxyles primaires en proportion variant de 40 à 90 % par rapport à la somme des fonctions hydroxyles primaires et secondaires. Ils ont de préférence une viscosité inférieure ou égale à 50 poises et possèdent de préférence de 2 à 6 fonctions hydroxyles par molécule.

2) le polyol (B) contenant des fonctions hydroxyles primaires est un polyester de haut poids moléculaire obtenu par réaction d'un acide polycarboxylique avec un alcool polyfonctionnel.

3) le prépolymère est défini par les quatre rapports suivants :

a) $\dfrac{nN}{a\alpha + b\beta}$ compris entre 0,05 et 0,95

b) $\dfrac{n}{n + a + b}$ compris entre 0,1 et 0,6 et de préférence entre 0,20 et 0,50

c) $\dfrac{b}{n + a + b}$ compris entre 0,02 et 0,85 et de préférence entre 0,10 et 0,80

d) $\dfrac{a}{n + a + b}$ compris entre 0,05 et 0,88 et de préférence entre 0,20 et 0,60

sachant que :

"n" est le nombre de molécules de polyisocyanate

N le nombre de fonctions -NCO par molécule

"a" le nombre de molécules des produits de condensation (A)

"b" le nombre de molécules de polyol (B)

$\alpha$ le nombre de fonctions à hydrogène mobile par molécule de produit de condensation (A)

$\beta$ le nombre de fonctions à hydrogène mobile par molécule de polyol (B).

Dans toute la description de la présente invention, il convient d'entendre :

- par oxyde d'alkylène un produit tel que, par exemple, l'oxyde d'éthylène, l'oxyde de 1,2-propylène, l'oxyde de 1,2-butylène, l'oxyde de 2,3-butylène, l'épichlorhydrine, l'oxyde de styrène, le tétrahydrofuranne ainsi que leurs dérivés.

- par alcool polyfonctionnel un produit tel que, par exemple, l'éthylène glycol, le 1,2-propylène glycol, le 1,3-butylèneglycol, le 1,4-butylèneglycol, le 1,5-pentanediol, le 1,4-pentanediol, le 1,3-pentanediol, le 1,6-hexanediol, le 1,7-heptanediol, la glycérine, le triméthylolpropane, le 1,3,6-hexanetriol, le pentaérythritol, le sorbitol, l' $\alpha$-méthyl-d-glucose et leurs dérivés.

- par acide polycarboxylique un produit tel que, par exemple, l'acide oxalique, l'acide malonique, l'acide succinique, l'acide glutarique, l'acide adipique, l'acide pimélique, l'acide subérique, l'acide azélaïque, l'acide sébacique, l'acide brassylique, l'acide thapsique, l'acide maléique, l'acide fumarique, l'acide glutaconique, l'acide $\alpha$-hydromuconique, l'acide $\beta$-hydromuconique, l'acide $\alpha$-butyl$\alpha$-éthylglutarique, l'acide $\alpha$-$\beta$-diéthylsuccinique, l'acide isophtalique, l'acide téréphtalique, l'acide hémimellitique, l'acide trimellitique, l'acide trimésique, l'acide mellophanique, l'acide préhnitique, l'acide pyromellitique, l'acide benzènepentacarboxylique, l'acide 1,4-cyclohexanedicarboxylique, l'acide 3,4,9,10-pérylènetétracarboxylique, ou encore les anhydrides ou esters d'alcools inférieurs de tels acides.

- par amine un produit choisi notamment parmi la méthylamine, l'éthylamine, la propylamine, la méthyléthanolamine, la méthyldiéthanolamine, la méthyl propanolamine, la méthyldipropanolamine, l'éthyléthanolamine, l'éthyl propanolamine, la diéthanolamine, la triéthanolamine, la méthylisopropanolamine, la tri-isopropanolamine, la diisopropanolamine, la diméthylaminopropylamine, l'éthylènediamine, l'hydrazine, la toluène diamine, la tétraméthylènediamine, l'hexaméthylènediamine, la N,N'-diméthylhydrazine, la N,N'-diméthylhydrazine, la 1,3-propylènediamine, la 4,4-diamino diphényl méthane diamine, la p-phénylènediamine, la 1,4-butane diamine, la diéthylènetriamine et la triéthylènetétramine.

- par polyisocyanate organique tout polyisocyanate dont le radical organique peut être aliphatique, aromatique, acyclique, alicyclique ou hétérocyclique tel que, par exemple, l'éthylène diisocyanate, l'éthylidène diisocyanate, le propylène-1,2-diisocyanate, le cyclohexylène-1,2-diisocyanate, le 2,6-toluylène-diisocyanate, le 4,4'-diphénylméthane diisocyanate, le 3,3'-diméthoxy-4,4'-biphénylène-diisocyanate, le p,p',p"-triphénylméthane diisocyanate, le 1,5-naphtalène-diisocyanate, le furfurylidène-diisocyanate, les polyphényl-polyméthylène-polyisocyanates et les polyisocyanates possédant des groupes carbodiimides, uréthannes, allophanates, isocyanates ou ureido.

Un procédé de fabrication des prépolymères selon l'invention consiste à faire réagir à une température comprise entre 10° et 150°C, et plus habituellement entre 20° et 80°C, le mélange d'au moins un polyisocyanate organique, d'au moins un produit de condensation (A) et d'au moins un polyol (B). Le cas échéant la réaction peut être effectuée en présence d'un catalyseur comme la triéthylènediamine ou l'octoacte stanneux.

Avec les prépolymères de l'invention, on peut préparer des mousses ou des élastomères de polyuréthanne en utilisant les formules et les modes opératoires bien connus de l'homme de l'art et semblables à ceux qui sont décrits par exemple dans les ouvrages suivants :

- Flexible Polyuréthane foams de G. WOODS - 1982 - Ed. Appl. Sciences Publishers.

- Kunstoff Handbuch de VIEWEG-HÖCHTLEN - Vol.7.

- Advances in Urethane Science and Technology de FRISCH et REEGEN - Vol.1 à 8.

Ces prépolymères présentent l'avantage de donner un effet d'ouverture de cellules, c'est-à-dire que dans le cas de la fabrication de mousse, cette dernière ne se rétracte pas.

Les exemples suivants, non limitatifs, illustrent l'invention. La définition des composés A et B des exemples est donnée dans le tableau en annexe. Le polyisocyanate utilisé est un mélange des isomères de toluène diisocyanate 2-4 et 2-6 dans le rapport 80-20 (TDI) ou du 4,4' diphénylméthane diisocyanate (MDI) pratiquement pur.

Le mélange des composés se fait au moyen d'un agitateur de forme turbine à une vitesse de $1.10^3$ tours/minute dans des boîtes de 2 à 5 litres. La viscosité du produit obtenu est mesurée au viscosimètre BROOKFIELD. Le numéro de l'aiguille employée est indiqué dans chaque exemple.

EXEMPLE 1

Dans un récipient métallique de 3 litres, on introduit à température ambiante 650 g de composé 1 B puis 116 g de composé 1 A. On agite 3 minutes puis on verse en 2 minutes 87 g de TDI. On agite 10 minutes. On note une température de 35°C. Le produit obtenu est blanc et sa viscosité à 25°C est de 43.750 centipoises (Aiguille LV 4).

Afin de montrer la stabilité du produit obtenu, à 70 g du composé 1 B, on ajoute 30 g du produit obtenu ci-dessus puis 3 g d'eau, 0,2 g de triéthylène diamine dilué à 33 % dans le dipropylène glycol (Dabco 33), 0,4 g d'huile de silicone (Tégostab BF 4380), 2 g de triéhanolamine, 1 g de glycérine et 1,2 g de diméthylaminopropylamine. Le mélange a une viscosité de 3750 centipoises (Aiguille LV 2). Après 24 heures, le mélange ne présente ni dépôt, ni décantation. Après centrifugation, 30 minutes à 5200 tours/minute, le mélange ne présente aucun dépôt.

EXEMPLE 2 (comparatif)

Dans les conditions de l'exemple 1, on mélange 900 g de composé 1 B, 48,7 g de triéthanolamine et 51,2 g de TDI. A 100 g du produit obtenu refroidi, on ajoute 3 g d'eau, 0,2 g de Dabco 33, 1,2 g de diméthylaminopropylamine, 0,4 g d'huile de silicone (BF 4380), 2 g de triéthanolamine et 1 g de glycérine. La viscosité du mélange s'élève lentement, passant de 2700 à 5800 centipoises en 1 heure (Aiguille LV 3), et après 24 heures on observe deux phases distinctes.

EXEMPLE 3

Dans les conditions de l'exemple 1, à 2600 g du composé 1 B, on ajoute 116 g du composé 1 A puis 34,8 g de TDI. On observe une température de 36°C après 12 minutes et la viscosité de ce produit blanc est de 1725 centipoises à 25°C (Aiguille LV 2).

EXEMPLE 4

Dans les conditions de l'exemple 1, à 2600 g du composé 1 B, on ajoute 58 g du composé 1 A puis 69,6 g de TDI. On observe une température de 33°C après 12 minutes et la viscosité BROOKFIELD de ce produit transparent est de 5050 centipoises à 25°C (Aiguille LV 3).

EXEMPLE 5

Dans les conditions de l'exemple 1, à 2400 g de composé 2 B, on ajoute 29 g de composé 1 A puis 17,4 g de TDI. On ne note pas d'augmentation sensible de la température. On obtient un produit transparent. On ajoute ensuite 2 g de Kosmos 29 (Octoate stanneux), on agite et on chauffe le tout 1 heure à 80°C sous agitation.

On obtient un produit légèrement opalescent dont la viscosité BROOKFIELD à 25°C est 650 centipoises (Aiguille LV 2).

Mélange à de l'eau et à des catalyseurs dans les mêmes conditions que dans l'exemple 1, ce produit est stable.

EXEMPLE 6

Dans les conditions de l'exemple 1, à 600 g du composé 2 B, on ajoute 116 g du composé 1 A puis 69,6 g de TDI. Après 12 minutes, on note une température de 40°C et la viscosité BROOKFIELD du produit blanc obtenu est 18 500 centipoises à 25°C (Aiguille LV 4).

Mélangé à de l'eau et à des catalyseurs dans les mêmes conditions que dans l'exemple 1, ce produit est stable.

EXEMPLE 7

Dans les conditions de l'exemple 1, à 650 g du composé 1 B, on ajoute 105 g du composé 2 A puis 52,2 g de TDI. On note une température de 42°C après 12 minutes et on obtient un produit transparent dont la viscosité BROOKFIELD à 25°C est 192 000 centipoises (Aiguille LV 4).

Pour caractériser la présence de fonctions-NCO libres, on prend 100 g de composé 1 B, on ajoute 5 g d'eau. On agite légèrement 30 secondes. Le milieu s'épaissit et devient légèrement blanc. On ajoute 1 g de Kosmos 29 (Octoate stanneux) puis on agite 30 secondes. On ajoute ensuite 1 g de TDI et on agite 30 secondes. Le milieu blanchit et l'on voit apparaître des bulles. Après 5 minutes, on obtient une pâte mousseuse blanche. Le rapport théorique $\dfrac{\text{nombre de fonctions NCO}}{\text{nombre de fonctions OH}}$ est égal à 1,6 %. On caractérise de cette façon la présence de plus de 1,6 % de NCO libres provenant du TDI.

On applique ce test en prenant 100 g du polyol modifié de l'exemple 6. On n'observe ni réaction gazeuse, ni formation d'une pâte mousseuse.

EXEMPLE 8

Dans les conditions de l'exemple 1, à 650 g du composé 1 B, on ajoute 116 g du composé 1 A puis 128 g d'Isonate 143 L (MDI pur). On note une température de 63°C après 12 minuts et on obtient un produit blanc dont la viscosité BROOKFIELD à 25°C est 33 000 centipoises (Aiguille LV 4).

Mélangé à de l'eau et des catalyseurs comme dans l'exemple 1, ce polyol modifié est stable.

EXEMPLE 9

Dans les conditions de l'exemple 1, à 1400 g du composé 3 B, on ajoute 141 g de composé 3 A puis 52,2 g de TDI. On observe une température de 39°C après 12 minutes et on obtient un produit blanc.

Mis en présence d'eau et de Kosmos 29, comme dans l'exemple 7, ce produit ne présente pas de dégagement gazeux et ne prend pas en masse.

Ce produit est thixotrope ; en effet, au viscosimètre BROOKFIELD, on trouve les valeurs suivantes :

| N° Aiguille | Vitesse de rotation (tours/minute) | Viscosité en centipoises |
|---|---|---|
| LV 3 | 6 | 2600 |
| LV 3 | 12 | 2420 |
| LV 3 | 30 | 2260 |
| LV 2 | 12 | 1850 |

EXEMPLE 10

Dans les conditions de l'exemple 1, à 1083 g du composé 1 B, on ajoute 616,5 g de composé 4 A après avoir dissous 2 g de triéthylène diamine. On ajoute ensuite 29 g de TDI. On note une température de 39°C après 12 minutes et on obtient un produit opalescent dont la viscosité BROOKFIELD à 25°C est 10 600 centipoises (Aiguille LV 3).

Mis en présence d'eau dans les mêmes conditions que dans l'exemple 7, ce produit ne change pas d'aspect, ne prend pas en masse et ne présente aucun dégagement gazeux.

EXEMPLE 11

Dans les conditions de l'exemple 1, à 1300 g du composé 4 B, on ajoute 116 g du composé 1 A et 69,6 g de TDI. On note une température de 35°C après 12 minutes et on obtient un produit blanc dont la viscosité BROOKFIELD à 25°C est 10 400 centipoises (Aiguille LV 3).

7

0185124

Mis en présence d'eau et de catalyseurs comme dans l'exemple 1, ce produit ne décante pas.

EXEMPLE 12

Dans les conditions de l'exemple 1, à 1300 g de composé 1 B, on ajoute 146 g de composé 1 A et 52,2 g de TDI. On note une température de 36°C après 12 minutes et on obtient un produit blanc dont la viscosité BROOKFIELD à 25°C est 5000 centipoises (Aiguille LV 3).

EXEMPLE 13

Dans les conditions de l'exemple 1, à 1650 g de composé 5 B, on ajoute 96 g de composé 1 A et 57,4 g de TDI. On note une température de 33°C après 12 minutes et on obtient un produit blanc thixotrope.

| N° Aiguille | Vitesse de rotation (tours/minute) | Viscosité en centipoises |
|---|---|---|
| LV 4 | 3 | 32 400 |
| LV 4 | 6 | 26 500 |
| LV 4 | 12 | 19 750 |
| LV 4 | 30 | 13 400 |

EXEMPLE 14

On chauffe à 80°C un mélange de 1280 g de composé 6 B, 1 g de triéthylène diamine et 116 g de composé 1 A. On ajoute ensuite au produit chaud 69,6 g de TDI. On agite et on laisse refroidir le produit sous agitation. On obtient un produit blanc dont la viscosité BROOKFIELD à 25°C est 20 000 centipoises (Aiguille LV 4).

Mélangé à de l'eau et du Kosmos 29 comme dans l'exemple 7, on n'observe ni dégagelement gazeux, ni prise en masse.

EXEMPLE 15

On procède comme dans l'exemple 1. A 1082 g de composé 1 B, on ajoute 48,3 g de composé 1 A (0,167 mole) puis 29 g de TDI. On note une température de 36°C après 12 minutes et la viscosité BROOKFIELD du produit blanc obtenu est 2550 centipoises à 25°C (Aiguille LV 2).

EXEMPLE 16 (exemple comparatif)

Dans les conditions de l'exemple 14, à 1082 g de composé 1 B, on ajoute 10 g d'éthylène diamine (0,167 mole) puis 290 g de TDI. On note une température de 42°C après 10 minutes et l'on obtient une pâte blanche très visqueuse. Après 24 heures, le produit est pris en masse.

### EXEMPLE 17

Dans les conditions de l'exemple 1, à 1300 g de composé 7 B, on ajoute 116 g du composé 1 A puis 69,6 g de TDI. On note une température de 35°C après 12 minutes et on obtient un produit blanc dont la viscosité BROOKFIELD à 25°C est 5250 centipoises (Aiguille LV 3).

### EXEMPLE 18

Dans les conditions de l'exemple 1, à 647,5 g de composé 8 B (qui joue à la fois les rôles de composé A et composé B) on ajoute 14, 8 g de TDI puis 2 g de Kosmos 29. Après agitation, on chauffe le tout 1 heure à 80°C.

On obtient un produit transparent dont la viscosité BROOKFIELD à 27°C est 610 centipoises (Aiguille LV 2).

Mélangé à de l'eau et à du Kosmos 29 dans les mêmes conditions que dans l'exemple 7, le mélange blanchit légèrement mais on n'observe ni dégagement gazeux, ni prise en masse.

### EXEMPLE 19

Dans les conditions de l'exemple 1, on mélange 1470 g de composé 7 B avec 2 g de Kosmos 29 et 225 g de composé 5 A. On ajoute ensuite 52,2 g de TDI et on agite. On note une température de 31°C après 12 minutes. On obtient un composé transparent jaune (le composé 7 B est jaune) dont la viscosité à 25°C est 2700 centipoises (Aiguille LV 2).

Mélangé à de l'eau et à du Kosmos 29 comme dans l'exemple 7, on n'observe pas de prise en masse.

### EXEMPLE 20

On introduit dans un bécher, 210 g du composé 1 B, 90 g du produit de l'exemple 1, 9 g d'eau, 3 g de diéthanolamine, 1,2 g de Dabco 33, 1,2 g d'huile de silicone BF 4380, 1,8 g d'huile de silicone 4113 et on agite, la température étant réglée à 22°C. On ajoute ensuite 0,75 g de Kosmos 29, on agite 10 secondes, à la suite de quoi on ajoute 107 g de TDI. On agite le tout 5 secondes et on verse le mélange dans un cube en papier. L'expansion commence et se termine 150 secondes après le début de l'ajout de l'isocyanate. En fin d'expansion, on observe un dégagement gazeux.

On obtient une mousse ne se rétractant pas, de densité 30 kg/m$^3$, dont la déformation rémanente est égale à 10 % (Norme NF 56 112) (Conditions : 70°C et 90 % d'enfoncement pendant 22 heures).

### EXEMPLE 21 (exemple comparatif)

On procède comme dans l'exemple 20. A 300 g de composé 1 B, on ajoute 9 g d'eau, 3 g de diéthanolamine, 1,2 g de Dabco 33, 1,2 g d'huile de silicone BF 4380, 1,8 g d'huile de silicone 4113 et on agite. On ajoute ensuite 0,75 g de Kosmos 29 puis 107 g de TDI. On obtient une mousse qui présente un très fort retrait.

0185124

EXEMPLE 22

On procède comme dans l'exemple 20. A 210 g du composé 1 B, on ajoute 90 g du polyol modifié de l'exemple 8 puis 9 g d'eau, 3 g de diéthanolamine, 1,2 g de Dabco 33, 1,2 g d'huile de silicone BF 4380, 1,8 g d'huile de silicone 4113. On agite. On ajoute 0,45 g de Kosmos 29 puis 118 g de TDI. On agite puis on verse le tout dans un cube. Le temps d'expansion commence et se termine 80 secondes après le début de l'ajout de l'isocyanate. En fin d'expansion, on observe un dégagement gazeux.

On obtient une mousse ne se rétractant pas, de densité 30 kg/m$^3$ et dont la déformation rémanente est de 9 %.

La dureté en CLD (norme 56 110) est :

- à 25 %   1,85 KPa
- à 50 %   2,72 KPa
- à 65 %   4,45 KPa

Son rebond horizontal est : 51 cm.

Pour déterminer le rebond horizontal, on laisse tomber d'une hauteur de 60 cm une bille d'acier de 28 g sur un échantillon ayant la forme d'un prisme droit, dont les dimensions sont 10 cm x 10 cm x 5 cm. La bille rebondit sur l'une des deux plus grandes faces qui est placée inclinée à 30°C par rapport à l'horizontale. On mesure la distance en cm qui sépare le centre de l'échantillon du point de chute de la bille après son rebond sur l'échantillon.

EXEMPLE 23

On procède comme dans l'exemple 20. A 210 g du composé 1 B, on ajoute 90 g du polyol modifié de l'exemple 17 puis 9 g d'eau, 9 g de diéthanolamine, 1,2 g de Dabco 33, 1,2 g de Silicone BF 4380, 1,8 g de Silicone 4113. On agite puis on ajoute 0,3 g de Kosmos 29 et 107 g de TDI. On verse le tout dans un cube. Le temps d'expansion est de 105 secondes.

On obtient une mousse ne présentant pas de retrait de densité 29 kg/m$^3$ et dont la déformation rémanente a pour valeur 6 %.

Sa dureté en CLD est :

- à 25 %   1,39 KPa
- à 50 %   2,27 KPa
- à 65 %   4,07 KPa.

Son rebond horizontal est : 50 cm.

EXEMPLE 24

On procède comme dans l'exemple 20 avec la formule suivante :

0185124

Composé 1 B........................ 210 g

Polyol modifié de l'exemple 10........ 90 g

Eau................................. 9 g

Diéthanolamine...................... 3 g

Silicone 4113....................... 2,8 g

Dabco 33............................ 0,42 g

Niax A1 (catalyseur aminé)........... 0,36 g

TDI................................. 115,8 g

Le temps d'expansion est 135 secondes.

On obtient une mousse ne se rétractant pas dont les caractéristiques sont les suivantes :

CLD à 25 %    1,44 KPa

à 50 %    2,29 KPa

à 65 %    3,83 KPa

Densité : 32 Kg/m$^3$

Déformation rémanente : 12 %

Rebond : 49 cm

EXEMPLE 25

On procède comme dans l'exemple 20 avec la formule suivante :

Composé 1 B........................ 210 g

Polyol modifié de l'exemple 13........ 90 g

Eau................................. 9 g

Diéthanolamine...................... 3 g

Dabco 33............................ 2,1 g

Silicone 4380....................... 1,2 g

Silicone 4113....................... 1,8 g

TDI................................. 117,8 g

On a un temps d'expansion de 105 secondes.

On obtient une mousse dont les caractéristiques sont les suivantes :

Densité : 32 Kg/m$^3$

CLD à 25 %    1,17 KPa

à 50 %    1,86 KPa

à 65 %    3,33 KPa

Déformation rémanente $>$ 30 %

Rebond : 51 cm.

EXEMPLE 26

On procède comme dans l'exemple 20 avec la formule suivante :

11  0185124

Polyol modifié de l'exemple 5......... 200 g

Eau.................................... 9,6 g

Diméthyléthanolamine.................. 0,6 g

Huile de Silicone Tégostab 2370....... 1,8 g

Kosmos 29............................. 0,4 g

TDI................................... 117,8 g

Le temps d'expansion est de 100 secondes.

On obtient une mousse dont les caractéristiques sont les suivantes :

Densité : 22,5 Kg/m$^3$

CLD à 25 %    2,75 KPa

à 50 %    3,85 KPa

à 65 %    5,50 KPa

Rebond : 42 cm

EXEMPLE 27 (exemple comparatif)

On procède comme dans l'exemple 20 avec la formule suivante :

Composé 2 B........................... 200 g

Eau.................................... 9,6 g

Diméthyléthanolamine.................. 0,6 g

Tégostab 2370......................... 1,8 g

Kosmos 29............................. 0,4 g

TDI................................... 116,8 g

Le temps d'expansion est 87 secondes.

Les caractéristiques de la mousse obtenue sont :

Densité : 22,5 Kg/m$^3$

CLD à 25 %    2,50 KPa

à 50 %    3,55 KPa

à 65 %    5,15 KPa

Rebond : 41 cm

EXEMPLE 28

On procède comme dans l'exemple 20 avec la formule suivante :

Polyol modifié de l'exemple 18....... 200 g

Eau.................................... 9,6 g

Tégostab 2370......................... 1,2 g

Diméthyléthanolamine................. 0,3 g

Kosmos 29............................. 0,4 g

TDI................................... 113 g

On obtient une mousse dont le temps d'expansion est 67 secondes et dont la densité est 21,5 kg/m$^3$.

EXEMPLE 29 (exemple d'élastomère)

On prépare un élastomère de la façon suivante :

on pèse 600 g du composé 2 B et l'on ajoute 400 g du polyol modifié fabriqué dans l'exemple 9. On ajoute ensuite 300 g de Tuboryl N, 300 g de Millicarb, 300 g de Dolomie SRB5, 50 g de tamis moléculaire 4 Angström et 8 g d'huile de silicolne Rhodorsil 9203. On agite lentement pendant 1 heure en évitant d'incorporer de l'air dans le mélange puis on met le tout 20 minutes dans un dessicateur dans lequel on fait un vide de 5 mm de mercure au moyen d'une pompe à palettes.

On prend ensuite 400 g de ce mélange, puis on ajoute 1 g de Super Adit (Sel de Mercure) et 23, 7 g de Lilène T838 (isocynate modifié). On mélange 30 secondes, on débulle sous vide (5 mm Hg) 5 minutes et on verse le tout dans un moule ouvert pour couler une plaque de 4 mm d'épaisseur. On dégaze en chauffant la plaque 10 minutes avec une flamme butane.

Le temps de séchage est inférieur à 24 heures.

On obtient une plaque dont on mesure les caractéristiques suivantes :

| | |
|---|---|
| Dureté Shore A (Norme ASTM D 2240) | 72 |
| Allongement (Norme NFT 46 002) | 76 % |
| Contrainte à la rupture (NFT 46 002) | 2 430 KPa |
| Déchirure cissoïde (Norme NFT 54 107) | 10 400 N/m |

EXEMPLE 30 (exemple comparatif)

On procéde comme dans l'exemple précédent en remplaçant le polyol modifié par le composé 3 B. On prépare un mélange contenant 600 g de polyol 5, 400 g de composé 3 B, 300 g de Tuboryl N, 300 de Millicarb, 300 g de Dolomie SRB 5, 50 g de tamis moléculaire 4 Angström et 8 g de Rhodorsil 9203. On mélange puis on dégaze sous vide.

On prend ensuite 400 g de ce mélange puis on ajoute 1,6 g de Super Adit et 20,6 g de Lilène T 838. On mélange 30 secondes ; on débulle sous vide (5 mm de Hg) et on coule une plaque de 4 mm d'épaisseur. On dégaze au butane.

Le temps de séchage est inférieur à 24 heures.

Les caractéristiques de la plaque obtenue sont les suivantes :

| | |
|---|---|
| Dureté Shore A (Norme ASTM D 2240) | 67 |
| Allongement (Norme NFT 46 002) | 106 % |
| Contrainte à la rupture (Norme NFT 46 002) | 1 886 KPa |
| Déchirure cissoïde (Norme NFT 54 107) | 10 800 N/m |

| Composé d'amorçage | Composé A | | | | | Composé B | | | | | | | |
|---|---|---|---|---|---|---|---|---|---|---|---|---|---|
| | 1 | 2 | 3 | 4 | 5 | 1 | 2 | 3 | 4 | 5 | 6 | 7 | 8 |
| | Ethylène diamine | Triéthanolamine | Ethylène diamine | Ethylène diamine | Orthotoluène diamine | Glycérine | Glycérine | Propylène glycol | Pentaérythritol | Niax 3232 | Triméthylol propane | Triméthylol propane | Ethylène diamine |
| % en poids d'oxyde de propylène | 100 | 100 | 100 | 85 | 55 | 86 | 90 | 85 | 84 | fabriqué par SHELL | 95 | 84 | 85 |
| % en poids d'oxyde d'éthylène | 0 | 0 | 0 | 15 | 45 | 14 | 10 | 15 | 16 | Polyol greffé contenant des O H primaires | 5 | 16 | 15 |
| Poids moléculaire | 290 | 350 | 470 | 3700 | 750 | 6500 | 3000 | 3500 | 6500 | | 6400 | 4900 | 3700 |
| % en nombre de groupements hydroxyles primaires | 0 | 0 | 0 | > 10 | 0 | 80 | 35 | 90 | 72 | | 40 | 75 | > 10 |

13

0185124

## REVENDICATIONS

1. Prépolymères stables de polyisocyanates à fonctions hydroxyles, constitués de produits de polyaddition d'au moins un polyisocyanate organique avec au moins un produit de condensation (A) d'oxyde d'alkylène sur une amine, en présence d'au moins un polyol (B) contenant des fonctions hydroxyles libres, caractérisés en ce que ledit polyol (B) contient des fonctions hydroxyles primaires et a un poids moléculaire supérieur ou égal à 3000.

2. Prépolymères selon la revendication 1, caractérisés en ce que le polyol (B) contenant des fonctions hydroxyles primaires est un polyéther ou polythioéther ayant un poids moléculaire compris entre 3000 et 10 000 obtenu par réaction d'un oxyde d'alkylène avec un alcool polyfonctionnel ou un thiodiglycol.

3. Prépolymères selon la revendication 2, caractérisés en ce que ledit polyéther ou polythioéther possède des fonctions hydroxyles primaires en proportion variant de 40 à 90 % par rapport à la somme des fonctions hydroxyles primaires et secondaires.

4. Prépolymères selon l'une des revendications 2 et 3, caractérisés en ce que ledit polyéther ou polythioéther a une viscosité inférieure ou égale à 50 poises.

5. Prépolymères selon l'une des revendications 2 à 4, caractérisés en ce que ledit polythioéther ou polyéther possède de 2 à 6 fonctions hydroxyles par molécule.

6. Prépolymères selon la revendication 1, caractérisés en ce que le polyol (B) contenant des fonctions hydroxyles primaires est un polyester de haut poids moléculaire.

7. Procédé de fabrication de prépolymères selon l'une des revendications 1 à 6, caractérisé en ce qu'il consiste à faire réagir à une température comprise entre 10° et 150°C, et plus habituellement entre 20° et 80°C, le mélange d'au moins un polyisocyanate organique, d'au moins un produit de condensation (A) et d'au moins un polyol (B).

## RAPPORT DE RECHERCHE EUROPEENNE

Office européen
des brevets

EP  84 40 2590

### DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | EP-A-0 116 758  (TEXACO) <br> * Revendications 1,5; page 4, lignes 23-33; page 6, lignes 7-17; page 9, exemple 1 * | 1-5,7 | C 08 G  18/50 <br> C 08 G  18/12 <br> C 08 G  18/40 <br> C 08 G  18/48 <br> C 08 G  18/14 |
| A | US-A-3 655 588  (P.R. MOSSO et al.) <br> * Revendications 1,10; colonne 2, lignes 28-38 * | 1 | |
| A | US-A-4 296 213  (M. CUSCURIDA et al.) <br> * Revendications 1,6; colonne 1, ligne 64 - colonne 2, ligne 17 * | 1-5,7 | |
| A | US-A-3 890 255  (B.G. VAN LEUWEN et al.) <br> * Revendications 1,2,6-9; colonne 2, lignes 1-44, 55-66; colonne 4, lignes 17-61; colonne 5, lignes 26-61 * | 1-5,7 | **DOMAINES TECHNIQUES RECHERCHES (Int. Cl 4)** <br><br> C 08 G |
| D,A | US-A-3 468 819  (J.F. SZABAT) <br> * Revendication 1; colonne 6, lignes 29-69 * | 1,6 | |
| A | GB-A-2 072 204  (J.P. ROWLANDS) | | |

Le présent rapport de recherche a été établi pour toutes les revendications

| Lieu de la recherche | Date d'achèvement de la recherche | Examinateur |
|---|---|---|
| LA HAYE | 19-08-1985 | VAN PUYMBROECK M.A. |

OEB Form 1503 03 82